# EUROPEAN PATENT APPLICATION

(11) **EP 4 730 060 A1**
(43) Date of publication of application: **22.04.2026**
(21) Application number: 25202740.4
(22) Date of filing: 17.09.2025
(51) Int. Cl.: G05B 19/418

(54) **BRIDGING DEVICE FOR EXTRACTING INFORMATION FROM FIELD DEVICES**

(30) Priority: 15.10.2024 US 202418916103
(71) Applicant: Honeywell International Inc., Charlotte, NC 28202 (US)
(72) Inventor: STRILICH, James, Charlotte, 28202 (US); KRISHNAMURTHY, Ananthapadmanabha Gujjanadu, Charlotte, 28202 (US); STANLEY, Roger Dean, Charlotte, 28202 (US)
(74) Representative: Haseltine Lake Kempner LLP

(57) **Abstract**

A device and method for extracting digital data from field devices of a process control system connected to a controller on a first network supported by a first protocol for transmission of the digital data to a second network using a second protocol. A bridging device connected to the first network and to the second network includes a first transmission path coupled to the first network that provides bi-directional communication between the field devices and the controller. A second transmission path operatively couples the first network to an extraction component associated with each field device. Each extraction component extracts digital data from the first protocol from each field device connected to the first network. A conversion component operatively coupled to each extraction component is arranged to receive the digital data and convert the digital data into the second protocol for transmission of the digital data on the second network.

## Description

### FIELD

The field is related to process plants and process control systems. The field may particularly relate to a device and method for extracting digital information from field devices.

### BACKGROUND

Process plants used in chemical, petroleum, or other processes, typically are controlled by process control systems that include at least one centralized process controller communicatively coupled to one or more field devices via analog and/or digital buses or other communication links. The field devices, which may be, for example, valves, valve positioners, switches, transmitters (e.g., temperature, pressure, and flow rate sensors), etc. that perform functions within the process plant such as opening or closing valves and measuring process parameters. The process controller receives signals indicative of the process measurements made by the field devices and/or other information pertaining to the field devices via an input/output (I/O) device, using this information to implement a control routine and then generates control signals which are sent over the buses or other communication links, such as wired or wireless channels via the input/output device to the field devices to control the operation of the process. Smart field devices, such as the field devices conforming to the well-known FOUNDATION Fieldbus protocol may also perform control calculations, alarming functions, and other control functions commonly implemented within the controller. The process controller, which is typically located within the plant environment, receives signals indicative of process measurements made by the field devices and/or other information pertaining to the field devices and executes a controller application that runs, for example, different control modules which make process control decisions, generate control signals based on the received information, and coordinate with the control modules or blocks being performed in the field devices, such as HART, PROFIBUS and FOUNDATION Fieldbus field devices. The control modules in the controller send control signals over the communication links to the field devices to thereby control the operation of at least a portion of the process plant or system, e.g., to control at least a portion of one or more industrial processes running or executing within the process plant. For example, the controllers and the field devices control at least a portion of a process being controlled by the process plant or system. I/O devices, which are located within the plant environment, are typically disposed between a controller and one or more field devices, and enable communications therebetween, e.g., by converting electrical signals into digital values and vice versa. As utilized herein, field devices, controllers, and I/O devices are generally referred to as "process control devices," and are generally located, disposed, or installed in a field environment of a process control system or plant.

One or more applications executed by the process controller provides for the control and regulation of the process operation of the plant. In addition to the process data used in control or regulation of the process plant the field devices may generate items of additional information and data, which make it possible to continuously optimize the processes controlling the plant, for example, by way of predictive analysis of failures, health monitoring, business applications, predictive maintenance and historization. Applications for such process optimizations may be held and processed centrally, e.g. in a centralized server in the plant or in the cloud and therefore there is a requirement for efficiently extracting and sending information transmitted from the field devices to a centralized server or cloud for analysis without impacting the control and regulation of the plant process.

### SUMMARY

The disclosure relates to a device and method for extracting digital information from field devices.

In a first embodiment a bridging device is disclosed for use in a process control system that includes a first network supporting a first protocol connected to a plurality of field devices and to at least one controller and a second network supporting a second protocol. The bridging device is connected to the first network and to the second network and includes a first connection device coupled to the first network and to at least one of the plurality of field devices. A first transmission path coupled to the first connection device and to a second connection device operatively connect the first network between the at least one controller and the at least one field device. A second transmission path coupled to the first connection device and to an extraction component is arranged to extract digital data from the first protocol transmitted by the at least one field device. A conversion component operatively connected to the extraction component is arranged to receive the digital data and convert the digital data into the second protocol for sending the digital data on the second network using the second protocol.

In a second embodiment, a method of extracting data from a plurality of field devices is disclosed that are connected to a first network using a first protocol for transmission to a second network using a second protocol. The method comprises receiving the first protocol from each of the plurality of field devices and routing the received first protocol to a controller using a first transmission path and to an extraction component using a second transmission path. The method further includes, extracting digital data from the first protocol using the extraction component corresponding to each of the plurality of field devices and converting the extracted digital data into a second protocol for transmission on a second network using the second protocol.

### BRIEF DESCRIPTION OF THE DRAWINGS

FIG. 1 illustrates an example industrial process control system according to this disclosure;
FIG. 2 illustrates a block diagram of an example smart control loop included in the process control system of FIG. 1;
FIG. 3 illustrates a block diagram of an example architecture of a distributed smart control loop included in the process control system of FIG. 1.
FIG. 4 is a perspective view of the field terminal block including an exemplary installation of the dongle in accordance with the described embodiments;
FIG. 5 is a block diagram of an example architecture of a distributed smart control loop having the dongle installed in accordance with the described embodiments;
FIG. 6 is a block diagram of an example dongle in accordance with the described embodiments; and
FIG. 7 is a flow diagram illustrating an example method of extracting and communicating process information by the dongle from field devices in accordance with the described embodiments.

### DETAILED DESCRIPTION

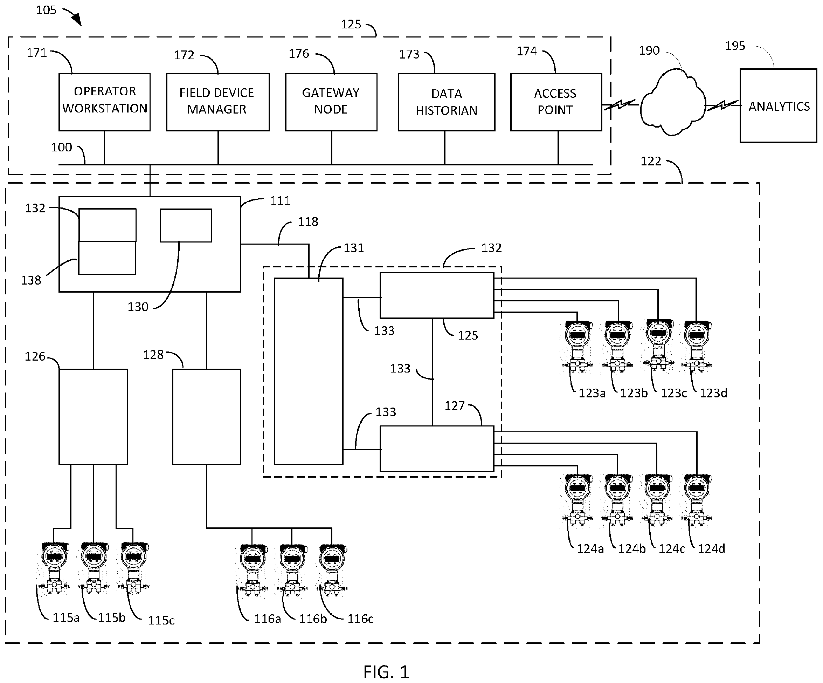

In FIG. 1, is a block diagram of an example process plant, process control environment, or process control system 105, which at least a portion of the process control system 105 has been illustrated by using any one or more of the techniques and apparatuses described herein. The process control system 105 includes one or more process controllers that receive signals indicative of process measurements made by field devices, process this information to implement a control routine, and generate control signals that are sent to process control communication links or networks to other field devices to control the operation of a process in the plant. Typically, at least one field device performs a physical function (e.g., opening or closing a valve, increasing, or decreasing a temperature, taking a measurement, sensing a condition, etc.) to control the operation of a process. Some types of field devices communicate with controllers by using I/O devices. Process controllers, field devices, and I/O devices may be wired or wireless, and any number and combination of wired and wireless process controllers, field devices and I/O devices may be included in the process control system 105.

For example, FIG. 1 illustrates a process controller 111 that is communicatively connected to wired field devices 115*a-c,* 116*a-c* via input/output (I/O) modules 126 and 128, and to wired field devices 123*a-d* and 124*a-d* by an I/O module 131 contained as a component of a marshaling device 132. The field devices 123*a-d* and 124*a-d* are connected to an I/O module 131 via a local distributed field terminal block (FTB) 125 and 127. Each field devices 123*a-d* is coupled to an FTB 125, while each of the field devices 124*a-d* is coupled to FTB 127. The FTBs 125, 127 provide wiring interconnections to each field device associated with a respective FTB and connectors for making wired connections from each FTB 125, 127 to the I/O card 131. While each of the FTBs 125, 127 is depicted in FIG. 1 as having four field devices 123*a-d,* 124*a-d* coupled to it, it will be apparent to those skilled in the art that each FTB 125, 127 may provide any number of connection points supporting any number of corresponding field devices. Any number of FTBs may be used in a marshaling device 132. Each FTB 125, 127 communicates with the I/O module 131 via a communication network 133 arranged in a ring network topology, the I/O module 131 conveying data to the controller 111.

A process control data highway 100 may include one or more wired communication links and may be implemented using any desired or suitable communication protocol such as, for example, an Ethernet protocol. In some configurations (not shown), the controller 111 may be communicatively connected to a wireless gateway using one or more communications networks using wireless communication links that support one or more communication protocols, e.g., Wi-Fi or other IEEE 802.11 compliant wireless local area network protocol, mobile communication protocol (e.g., WiMAX, LTE, or other ITU-R compatible protocol).

Controller 111 may operate to implement a batch process or a continuous process using at least some of the field devices 115*a-c,* 116*a-c.* In an embodiment, in addition to being communicatively connected to the process control data highway 100, the controller 111 is also communicatively connected to at least some of the field devices 115*a-c,* 116*a-c* using any desired hardware and software communication protocols. Such as for example, standard 4-20 mA analog I/ O cards 126, 128, and/or any smart communication protocol such as the FOUNDATION^{®} Fieldbus protocol, the HART^{®} protocol, etc. Of course, the wired field devices 115*a-c* and 116*a-c* could conform to any other desired standard(s) or protocols, such as any wired protocols, including any standards or protocols developed in the future.

Process controller 111 of FIG. 1 includes a processor 130 that implements or oversees one or more process control routines 138 (e.g., that are stored in a memory 132). The processor 130 is configured to communicate with the field devices 115*a-c* and 116*a-c* and with other nodes communicatively connected to the controller 111. It should be noted that any control routines or modules described herein may have been implemented or executed by different controllers or other devices if so desired. Likewise, the control routines or modules 138 described herein which are to be implemented within process control system 105 may take any form, including software, firmware, hardware, etc. Control routines may be implemented in any desired software format, such as using object-oriented programming, ladder logic, sequential function charts, function block diagrams, or using any other software programming language or design paradigm. The control routines 138 may be stored in any desired type of memory 132, such as random-access memory (RAM), or read only memory (ROM). Likewise, the control routines 138 may be hard coded into, for example, one or more EPROMs, EEPROMs, application specific integrated circuits (ASICs), or any other hardware or firmware elements. Thus, controller 111 may be configured to implement a control strategy or control routine in any desired manner.

The controller 111 implements a control strategy using function blocks, where each function block is an object or other part (e.g., a subroutine) of an overall control routine and operates in conjunction with other function blocks (via communications links) to implement process control loops within the process control system 105. Control based function blocks typically perform one of an input function, such as that associated with a transmitter, a sensor or other process parameter measurement device, a control function, such as that associated with a control routine that performs PID, fuzzy logic, etc. control, or an output function which controls the operation of some device, such as a valve, to perform some physical function within the process control system 105. Function blocks may be stored in and executed by the controller 111, with standard 4-20 mA devices and with some types of smart field devices such as HART devices or may be stored in and implemented by the field devices themselves, such as with FOUNDATION Fieldbus devices. Controller 111 may include one or more control routines 138 that may implement one or more control loops, which are performed by executing one or more of the function blocks.

The wired field devices 115*a-c,* 116*a-c* may be any types of devices, such as sensors, valves, transmitters, positioners, etc., while the I/O modules 126 and 128 may be any types of I/O devices conforming to any desired communication or controller protocol. In FIG. 1, the field devices 115*a-c* are standard 4-20 mA devices that communicate over analog lines or combined analog and digital lines to the I/O card 126, while the field devices 116*a-c* are smart devices, such as FOUNDATION Fieldbus field devices, that communicate over a digital bus to the I/O card 128 using a FOUNDATION Fieldbus communications protocol.

At the same time, the wired field devices 123*a-d* and 124*a-d* may be any types of devices, including sensors, valves, transmitters, positioners, etc., and may communicate, with the I/O module 131, using a wired HART communication protocol. The HART communication protocol uses 4-20 mA loop current to send and receive analog signals, but also superimposes a digital carrier signal on the analog signal to enable two-way field communications with HART smart field instruments.

In FIG. 1, the process control system 105 includes one or more operator workstations 171 that are communicatively connected to the data highway 100. Using the operator workstations 171, operators may view and monitor run-time operations of the process control system 105, as well as take any diagnostic, corrective, maintenance, and/or other actions that may be required. At least some of the operator workstations 171 may be located at various, protected areas in or near the plant, and in some situations, at least some of the operator workstations 171 may be remotely located, but nonetheless in communicative connection with the plant. Operator workstations 171 may be wired or wireless computing devices.

The example process control system 105 is further illustrated as including a field device manager 172 communicatively connected to the data highway 100. Field device manager 172 enables users to commission change and maintain smart field devices. Remote management of field devices may be made via the data highway 100 to the field devices. This allows instrumentation engineers to create or change operator interfaces and allow the operator to view data and change data settings of the smart field devices.

The example process control system 105 includes a data historian 173 communicatively connected to the data highway 100. Data historian 173 operates to collect some or all of the process data provided across the data highway 100, and to historize and store the collected process data for long term storage and for later retrieval. Data historian 173 is centralized and has a unitary logical appearance to the process control system 105, although multiple instances of a data historian 173 may execute simultaneously within the process control system 105.

In some configurations, the process control system 105 includes one or more wireless access points 174 that communicate with other devices using wireless protocols, such as Wi-Fi or IEEE 802.11 compliant wireless local area network protocols, mobile communication protocols such as WiMAX (Worldwide Interoperability for Microwave Access), LTE (Long Term Evolution) or other ITU-R (International Telecommunication Union Radiocommunication Sector) compatible protocols, short-wavelength radio communications such as near field communications (NFC) and Bluetooth, or other wireless communication protocols. Typically, wireless access point 174 may allow handheld or other portable computing devices (e.g., user interface devices) (not shown) to communicate over a respective wireless process control communication network. The access point 174 may also be used to communicate wirelessly with the cloud, to access remotely located applications that may be used to analyze and optimize the processes controlling the plant, for example, by way of predictive analysis of failures, health monitoring, business applications and predictive maintenance.

In some configurations, the process control system 105 includes one or more gateway nodes 176, to systems that are external to the immediate process control system 105. Typically, such systems are customers or suppliers of information generated or operated on by process control system 105. For example, the process control plant may include a gateway node 176 to communicatively connect the process control system 105 of the process plant with another process plant. Additionally or alternatively, the process control plant may include a gateway node 176 to communicatively connect the process control system 105 of the process plant with an external public or private system, such as a laboratory system (e.g., Laboratory Information Management System or LIMS), an operator rounds database, a materials handling system, a maintenance management system, a product inventory control system, a production scheduling system, a weather data system, a shipping and handling system, a packaging system, the Internet, another provider's process control system, or other external systems.

It is noted that although FIG. 1 only illustrates a single controller 111 with a finite number of field devices 115*a-c,* 116*a-c,* 123*a-d,* and 124*a-d* included in the example process control system 105, this is only an illustrative and non-limiting embodiment. Any number of controllers 111 may be included in the process control plant or system 105, and any of the controllers 111 may communicate with any number of wired devices and networks to control a process in the plant. For example, the process control system 105 may include various physical areas, each having an associated one or more controllers 111 in communication (via additional I/O modules 126, 128 and 131) with an associated set of field devices and networks, in that physical area.

Further, it is noted that the process control system 105 of the process plant of FIG. 1 includes a field environment 122 (e.g., "the process plant floor") and a back-end environment 125 which are communicatively connected by data highway 100. As shown in FIG. 1, field environment 122 includes physical components (e.g., process control devices, networks, network elements, etc.) that are disposed, installed, and interconnected therein to operate to control the plat industrial process during run-time. For example, controller 111, the I/O cards 126, 128, 131 the field devices 115*a-c,* 116*a-c* 123*a-d* and 124*a-d,* are located, disposed, or otherwise included in the field environment 122 of the process plant. In the field environment 122 of the process plant floor, raw materials are received and processed using the physical components disposed therein to generate one or more products.

The back-end environment 125 of the process plant includes various components such as computing devices, operator workstations, historians access points and gateway nodes along databases or databanks, etc. that are shielded and/or protected from the harsh conditions and materials of the field environment 122. Referring to FIG. 1, the back-end environment 125 includes, for example, the operator workstations 171, field device manager 172, data historian systems 173, and/or other centralized administrative systems, computing devices, and/or functionality that support the run-time operations of the process control system 105. In some configurations, various computing devices, databases, and other components and equipment included in the back-end environment 125 of the process control system 105 may be physically located at different physical locations, some of which may be local to the process plant, and some of which may be remote.

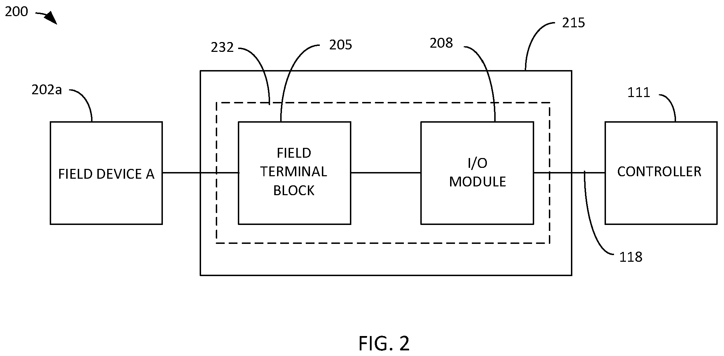

FIG. 2 illustrates a block diagram depicting an example architecture of an example smart process control loop 200, for example a process control loop in which a smart or intelligent field device 202*a* operates using a HART communication protocol, and that may be commissioned using any one or more of the techniques described herein. Generally, as used herein, "smart" or "intelligent" field devices are field devices that integrally include one or more processors and one or more memories.

The control loop 200 a may be integrated or incorporated into process control system 105 of a process plant to be utilized in controlling a process during run-time operations of the process plant. For example, control loop 200 may be installed or disposed in field environment 122 of the process plant. Within the example process control loop 200 shown in FIG. 2, smart or intelligent field device 202*a* is communicatively connected to a marshaling device 232. Marshalling device 232 contains a field termination block 205 that is communicatively connected to an I/O module 208. The I/O module 208 is communicatively connected via a communication network 118 to a controller 111. During on-line operations of the process control system 105, the process controller 111 receives digital values of the signals generated by the smart field device 202*a* and operates on the received values to control a process within the process plant, and/or send signals to change the operation of the field device 202*a.*

In FIG. 2, the field terminal block 205, and the I/O module 208 are depicted as being located together in a cabinet or housing 215 (such as an I/O cabinet) that electrically interconnects the field terminal block 205 and the I/O module 208 and/or other components housed within the cabinet 215 via a bus, backplane, or other suitable interconnection mechanism.

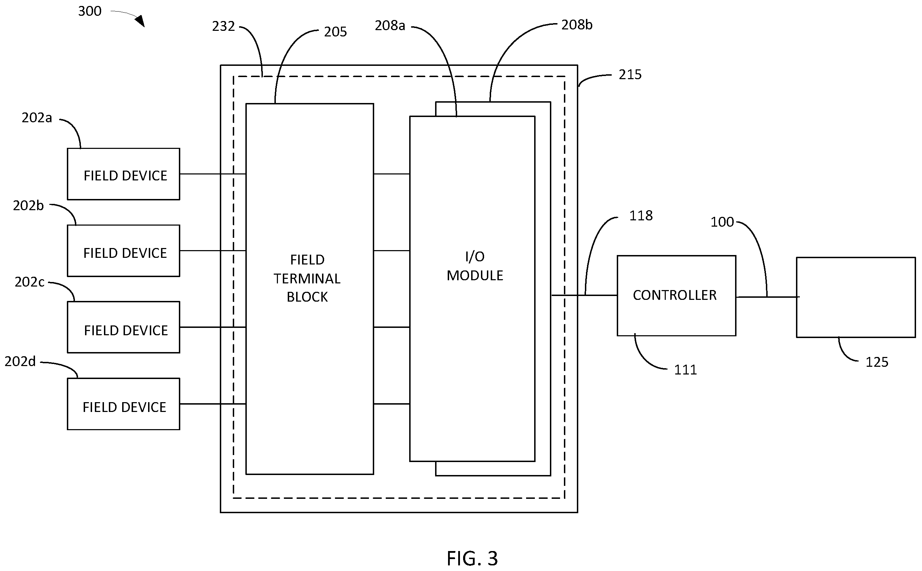

Each marshaling device 232 may support a plurality of configurable channels, each of which corresponds to an individual control loop 200. Such a configuration is depicted in FIG 3. A smart control loop 300 containing a plurality of field devices 202*a-d* each are communicatively connected to a corresponding marshaling device 232 and to terminal block 205 that, in turn, are coupled to an associated I/ O modules 208*a-b.* The I/O modules 208*a-b* may be arranged as a redundant pair (e.g., a primary I/O module 208*a* and a secondary I/O module 208*b*) arranged to provide fault tolerant operations if one of the redundant I/ O modules 208*a* or 208*b* fails. In the event of such a failure, for example the failure of the primary I/O module 208*a*, the remaining one of the redundant I/ O modules (e.g., the secondary I/O card 208*b*) assumes control and performs the same operations that would otherwise have been performed by the failed I/O module. The redundant pair of I/O modules 208*a-b* are each coupled to communication network 118 and to the controller 111 which, in turn, is connected via data highway 100 to the back-end environment 125 of the process control system 105. The field terminal block 205, and the redundant I/ O modules 208*a-b* may all be enclosed in cabinet 215. While in the embodiment depicted in FIG. 3, the field terminal block 205 supports 4 field devices (e.g., 202*a-d*), the I/O terminal block 205 may, in varying embodiments, support fewer or more field devices. Additionally, fewer field devices could be connected to field terminal block 205 than the field terminal block 205 supports. For example, the field terminal block 205 may support 16 field devices, but at any particular time may be connected to 15, 12, 10, 7, or even 1 field device.

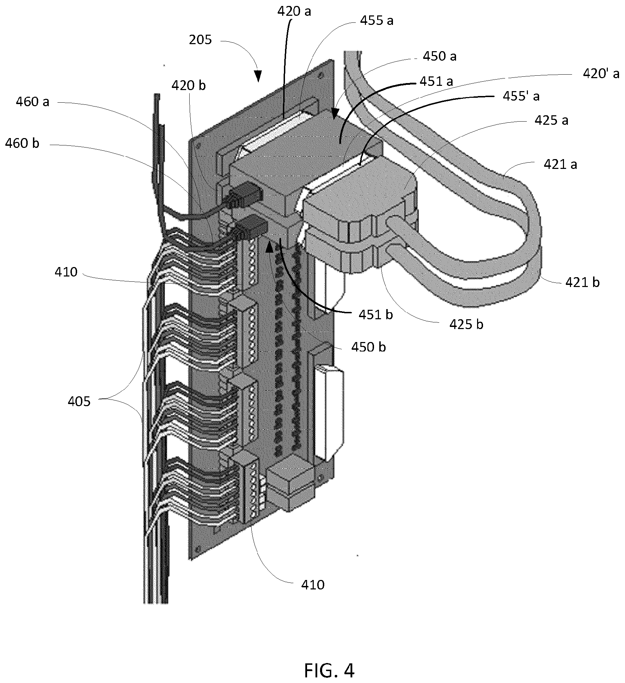

FIG. 4 illustrates a perspective view of an example field terminal block 205. In FIG. 4 field devices, for example field devices 202*a-d* are communicatively connected via wired control loops 405 to termination devices 410 located on field terminal block 205. Each wire of the control loops 405 is accepted and electrically connected into an individual wire retaining device on the termination device 410, such as for example a screw terminal. Each terminal device 410 in turn is connected via a backplane distribution network (not shown) to a pair of terminal connector slots 420*a-b*. Since field termination block 205 is typically connected to a redundant pair of I/O modules 208*a-b,* two identical terminal connector slots 420*a-b* are provided on field termination block 205. Each of the connector slots 420*a-b* are arranged to mate with a respective I/O cable 421*a-b* via a cable connector 425*a-b.* Cables 421*a-b* couple the I/O modules 208*a-b* to field terminal block 205. Each cable connector 425*a-b* may have a plurality of pins that are electrically connected to a plurality of complementary sockets formed on connector slot 420*a-b.* It will be appreciated by those skilled in the art that the cable connector may be configured with the sockets and the connector slots with the pins.

FIG. 4 further illustrates the installation of a dongle, shown as a redundant pair of dongles 450*a-b* mounted to field terminal block 205. The dongles 450*a-b* are used for extracting data and information from smart field devices 202*a-d* connected to field terminal block 205. Each dongle 450*a-b* includes a housing 451*a-b* that internally contains circuitry for extracting the data and information. A terminal connector 455*a-b* on a first end of each dongle 450*a-b* is arranged to plug into a respective terminal slot 420*a-b.* That is, dongle 450*a* includes a terminal connector 455*a* that plugs into terminal slot 420*a* to communicatively connect dongle 450*a* to terminal block 205. Similarly, the second dongle 450*b* includes a terminal connector 455*b* that plugs into terminal slot 420*b* to communicatively connect dongle 450*b* to the field terminal block 205. A second end of each dongle 450*a-b* includes a dongle terminal slot 455*'a-b* (455*'b* not shown) arranged to accept a respective I/O cable connector 425*a-b,* thereby connecting a respective I/O module 208*a-b* to a respective dongle 450*a-b.* That is, cable connector 425*a* plugs into and communicatively connects to the dongle terminal slot 455'*a*, and cable connector 425b plugs into and communicatively connects to the dongle terminal slot 455'*b* of dongle 450b.

Each dongle 450*a-b* is arranged to electrically connect to the smart control loops 300 terminated at field termination block 205 from the smart field devised 202*a-d* as shown in FIG. 3. Each dongle 450*a-b* also allows the smart control loops from the smart field devices to pass through the dongles 450*a-b* to a respective I/O module 208*a-b* via cables 421*a-b.* Each dongle 450*a-b* therefore is arranged to couple the smart field devices 202*a-d* terminated at the field terminal block 205 to I/O modules 208*a-b* and asynchronously provide circuitry that extracts data and information from the smart control loops. The dongles 450*a-b* operate on-process allowing the core control infrastructure discussed in FIG. 3 to operate without impact to the normal operation of process control system 105.

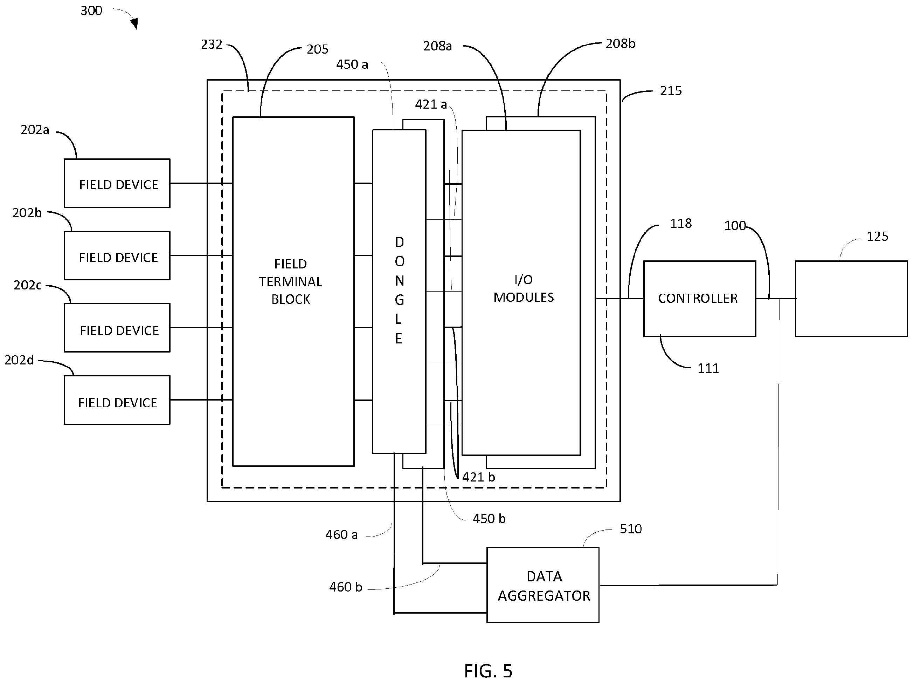

With reference to FIG. 5 and with continued reference to FIG. 4, the interconnection of the dongles 450*a-b* to the smart process control loops 300 will now be explained. The smart process control loops 300 from field devices 202*a-d* are each communicatively connected to a corresponding marshaling device 232 and to a field terminal block 205 that, in turn, is communicatively coupled to an associated I/ O module 208*a-b.* As was explained in FIG. 3 I/O modules 208*a-b* are configured as a redundant pair (e.g., a primary I/O module 208*a* and a secondary I/O module 208b. The redundant pair of I/O modules 208*a-b* are each coupled via communication network 118 and to the controller 111 which, in turn, is communicatively connected via data highway 100 to the back-end environment 125 of the process control system 105. The field terminal block 205, and the redundant I/ O modules 208*a-b* may all be enclosed in cabinet 215.

Each dongle 450*a-b* is coupled to the field terminal block 205 and the smart control loops from field devices 202*a-d* and to I/O modules 208*a-b.* Specifically, each dongle 450*a-b* is arranged to both connect the smart control loops from the field terminal block 205 to the I/O modules 208 *a-b* and also extract digital control information transmitted on the smart control loops 300. Each dongle 450*a-b* includes circuitry that extracts the digital data signals from the smart control loops from each smart field device 202*a-d.* The digital data signals are converted by each dongle 450*a-b* into a second communication protocol and transmitted via a second communication network 460*a-b* to the back-end environment 125 via data highway 100 for analysis and processing. A data aggregator 510 may be connected between the dongle and the second communication network 460*a-b* and the data highway 100. The data aggregator 510 is used to collect the digital information from multiple field terminal blocks 205 connected to the marshalling device 232.

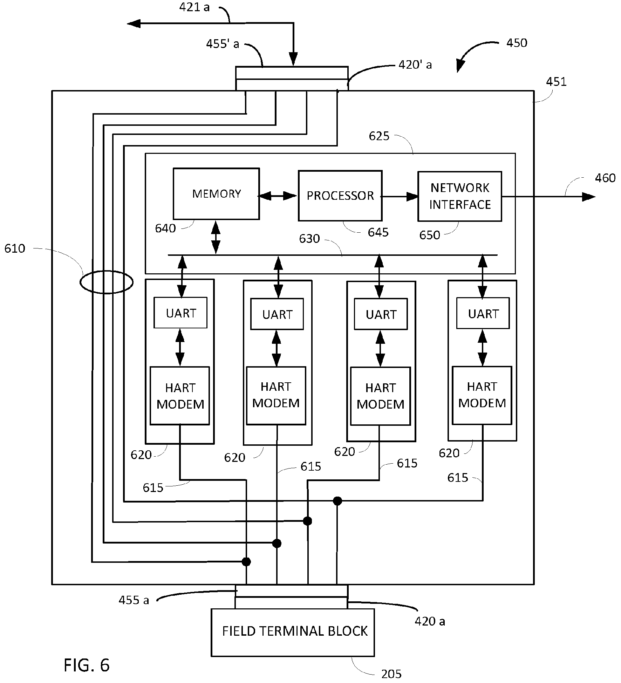

With reference to FIG. 6 the internal components comprising each dongle 450*a-b* is illustrated. Since each dongle is identical, only the components of dongle 450*a* will be shown. The exemplary dongle 450*a* is shown configured to operate with and retrieve the digital data signals on the smart control loops 300 transmitted by the smart field devices 202*a-d* using a Highway Addressable Remote Transducer (HART) communication protocol. The HART communication protocol is a bi-directional communication protocol that provides data communication between smart field devices and a host system such as process control system 105. Communication occurs between two HART-enabled devices, typically a smart field device and a control or monitoring device such as controller 111.

The HART communication protocol provides two simultaneous communication channels, one analog, the other digital: A 4-20mA analog channel communicates the primary measured value (PV) as an analog value using electrical current with the wiring that provides power to the smart field instrument. The controller then converts the current value to a physical value according to parameters defined by HART software executing in the controller. For example, a current value of 7 mA may represent a temperature of 80 degrees F.

The HART communication protocol makes use of the frequency shift keying (FSK) standard to superimpose digital data signals at a low level on top of the 4-20mA analog channel. The HART protocol communicates at 1200 bps without interrupting the 4-20mA analog channel and allows a host application to get two or more digital updates per second from a smart field device. As the digital FSK signal is phase continuous, there is no interference with the signals of the analog channel. Additional device information is communicated on the superimposed digital data channel and contains information from the smart field device including device status, diagnostics, additional measured or calculated values, etc. This enables two-way field communication to take place and makes it possible for additional information beyond just the normal process variable to be communicated to/from a smart field device.

The exemplary dongle 450 schematically shown at FIG. 6 provides within the housing 451 a first transmission path 610 through the dongle 450. The first transmission path 610 couples the HART smart control loops received at the field termination block 205 from field devices 202*a-d* to be passed through the dongle 450 to 1/O module 208. A second transmission path 615 simultaneously couples the HART smart control loops to translation components 620 and to a conversion component 625 housed in the dongle 450. The translation components 620 extract the digital data and information from the HART 4-20 mA analog channel. The conversion component 625 packages the extracted digital data and information into a second communication protocol for transmission of the received digital data and information to the back-end environment 125 of process control system 105.

As is illustrated in FIG. 6, dongle 450 receives the HART control loops from each smart field device 202*a-d* via slot 420*a* of the field terminal block 205 connected to the dongle 450 terminal connector 455*a*. The first transmission path 610 routes the received HART control loops through the dongle 450 to dongle slot 425'*a*. I/O cable connector 455'*a* connected to dongle slot 425'a couples the HART control loops to I/O module 208*a* and to the controller 111.

The HART smart control loops received from dongle connector 455*a* are also electrically connected to the second transmission path 615. Each HART control loop from an individual smart field device is coupled via the second transmission path 615 to an individual extraction component 620. In the example illustrated in FIG. 6, four extraction components 620 are shown, each extraction component receiving the 4-20 mA smart control loop containing the HART analog and digital channel from a respective one smart field device 202*a-d.* Each extraction component 620 extracts the data and information from the HART digital channel and couples the extracted data and information to the conversion component 625 via an internal bus 630. The conversion component receives the HART data and information and converts the received data and information into a second communication protocol for output from the dongle 450 via the second communication network 460.

While in the embodiment depicted in FIG. 6, the dongle 450 supports 4 smart field devices (e.g., 202*a-d)*, the dongle 450, in varying embodiments, may support fewer or more smart field devices. Additionally, fewer smart field devices could be connected to the dongle 450 than the dongle 450 supports. For example, the dongle 450 may support 16 field devices, but at any particular time may be connected to 15, 12, 10, 7, or even 1 smart field device.

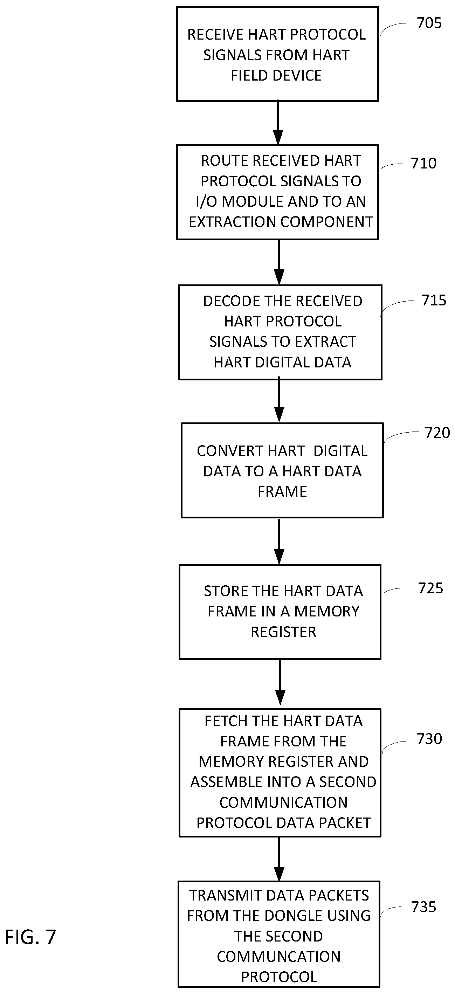

An exemplary operation of the dongle 450 described above is outlined in FIG. 7. For the ease of the explanation, the operation shown in FIG. 7 will use a single HART smart control loop. It will be appreciated that each HART control loop applied to the dongle 450 operates in the same manner as will be described in the process of FIG. 7. In step 705 a smart control loop operating using a HART 4-20 mA communication protocol is applied to slot connector 455*a* of the dongle 450 from field terminal block 205. The smart control loop contains process data on a HART analog channel and digital device data on a digital channel from a smart field device, (e.g., smart field device 202*a*) coupled to the field terminal block 205.

In step 710, the received HART smart control loop communication protocol signals applied to the dongle 450 are routed through the dongle using the first transmission path 610 to slot 425'*a*. I/O cable connector 455'*a* connected to dongle slot 425' couples the received HART communication protocol to I/O module 208 and to the controller 111. The first transmission path 610 provides a bi-directional communication path through the dongle 450 for data communication between a smart field device (e.g., smart field devices 202*a-d*) and a host device (e.g., controller 111). At the same time, the received HART smart control loop applied to the dongle 450 is also coupled to a second transmission path 615 that couples the received HART analog and digital channels to an extraction component 620. The extraction component consists of a HART modem and a universal asynchronous receiver transmitter (UART).

In step 715 The HART modem translates the HART FSK digital channel from the HART analog channel and captures the data bits from the HART digital channel. This translation can be made using any commercial OTS HART modem device, such as for example, HART modem DAC8474OH manufactured by the Texas Instruments corporation.

Next in step 720 the HART modem sends the captured data bits to the UART for assembly of the data bits into a HART protocol byte. The HART protocol byte consists of 11 data bits containing a start bit, a HART byte consisting of 8 data bits, a parity bit, and a stop bit. The HART protocol byte is further assembled into HART data frame that includes preamble bytes, start byte, address byte, expansion byte, command byte, byte count, status bytes, data field bytes and a checksum.

The HART data frames are next coupled in step 725 to bus 630 of the conversion component 625 for storage in memory device 640. Each received HART frame is stored in an individual register of memory 640.

In step 730 processor 645 fetches the HART data frames from memory 640 and converts and assembles the HART data frames into the second communication protocol. For example, the processor may be programmed to convert the HART data frames into an Ethernet protocol and subsequently assemble the data in the HART data frames into Ethernet packets.

In step 735 the converted data packets are coupled to a network interface 650. The network interface transmits the data packets from dongle 450 using the second communication protocol network 460. A cable connector (not shown) communicatively connects the network interface 650 to network 460. The second communication network 460 may be an Ethernet network wherein Ethernet data packets are transmitted over the Ethernet network from the network interface 650 over the Ethernet network to the data highway 100 and to the back-end environment 125 of process control system 105 for historization, processing and or analysis by way of predictive analysis of failures and health monitoring of the smart control loops and field devises. Historization for later retrieval of the HART digital data using data historian 173 and the processing of the HART digital data using operator workstation 171 by plant operators. The HART digital data may also be sent to access point 174 for transmission to cloud 190 for analysis by analytics applications 195 for predictive analysis and health monitoring of the smart control loops and connected devices.

It may be advantageous to set forth definitions of certain words and phrases used throughout this patent document. The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present application should not be read as implying that any particular element, step, or function is an essential or critical element that must be included in the claim scope. The scope of patented subject matter is defined only by the allowed claims. Moreover, none of the claims is intended to invoke 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," or "controller" within a claim is understood and intended to refer to structures known to those skilled in the relevant art, as further modified or enhanced by the features of the claims themselves and is not intended to invoke 35 U.S.C. § 112(f).

While the following is described in conjunction with specific embodiments, it will be understood that this description is intended to illustrate and not limit the scope of the preceding description and the appended claims.

Without further elaboration, it is believed that using the preceding description that one skilled in the art can utilize the present disclosure to its fullest extent and easily ascertain the essential characteristics of this disclosure, without departing from the spirit and scope thereof, to make various changes and modifications of the present disclosure and to adapt it to various usages and conditions. The preceding preferred specific embodiments are, therefore, to be construed as merely illustrative, and not limiting the remainder of the disclosure in any way whatsoever, and that it is intended to cover various modifications and equivalent arrangements included within the scope of the appended claims.

## Claims

1. A bridging device (450) for use in a process control system including a first network supporting a first protocol, the first network having a plurality of field devices (202*a-d*) and at least one controller (111), and a second network supporting a second protocol, the bridging device operatively connected to the first network and to the second network, the bridging device comprising:
a first connection device (455*a*) coupled to the first network and to at least one of the plurality of field devices (202*a-d*);
a first transmission path (610) coupled to the first connection device (455*a*) and to a second connection device (455'*a*) operatively connecting the first network between the at least one controller (111) and the at least one field device (202*a-d*);
a second transmission path (615) coupled to the first connection device (455*a*) and to an extraction component (620), the extraction component (620) arranged to extract digital data from the first protocol transmitted by the at least one field device (202*a-d*); and
a conversion component (625) operatively connected to the extraction component (620) arranged to receive the digital data and convert the digital data into the second protocol for use in the second network; and
transmit the digital data on the second network using the second protocol.

2. The bridging device of claim 1 wherein, the first network includes at least one control loop (300) connecting the at least one field device (202*a-d*) to the controller (111).

3. The bridging device of claim 2 wherein, the first network includes a field terminal block (205) operatively connected between the plurality of field devices (202*a-d*) and at least one I/O module (208), wherein the at least one field device (202*a-d*) bi-directionally communicates with the controller (111) using the at least one control loop (300) using the field terminal block (205) and the at least one I/O module (208).

4. The bridging device of claim 3 wherein, the field terminal block (205) includes a slot (420*a*)*,* and the first connection device (455*a*) is a bridging device connector arranged to cooperate with the terminal block slot (420*a*) to operatively connect the first and the second transmission paths (610, 615) to the at least one control loop (300).

5. The bridging device of claim 3 wherein, the I/O module (208) includes a cable (421*a*) having a first end operatively connected to the I/O module and a second end operatively connected to an I/O module connector (425*a*)*,* the bridging device (450) including a slot (420*'a*) arranged to cooperate with the I/O module connector (425*a*) to operatively connect the at least one control loop (300) on the first transmission path (600) to the I/O module (208).

6. The bridging device of claim 4 wherein, the bridging device extraction component (620) is connected to the at least one control loop (300) of the second transmission path (615), the extraction component (620) including a modem arranged to receive the first protocol and extract the digital data from the first protocol on the at least one control loop (300).

7. The bridging device of claim 6 wherein, the extraction component (620) includes a serial device connected to the modem, the serial device receiving the digital data from the modem and arranged to assemble the received digital data into a first protocol data frame.

8. The bridging device of claim 7 wherein, the conversion component (625) includes:
a processor (645); and
a memory (640) connected to the serial device of the at least one extraction component (625) and to the processor (645);
wherein the memory (640) is arranged to receive and store in the memory the first protocol data frame from the serial device.

9. The bridging device of claim 8 wherein conversion component (625) further includes a network interface (650) connected to the processor (645) and to the second network (460), wherein the processor (645) is arranged to fetch the first protocol data frame from the memory (640) and convert the first protocol data frames into a second protocol data packet for transmission on the second network(460) from the network interface (650).

10. The bridging device of claim 9 wherein, the first network includes a plurality of control loops (300) each control loop connecting a respective one field device of the plurality of field devices (202*a-d*) to the controller (111), the bridging device connector (455*a*) cooperating with the terminal block slot (420*a*) to operatively connect the first (610) and the second (615) transmission paths to the plurality of control loops (300), wherein each field device bi-directionally communicates with the controller (111) using a respective control loop using the field terminal block (270) and the at least one I/O module (208).

11. The bridging device of claim 10 wherein, the bridging device (450) includes a plurality of extraction components (620), each extraction component having a modem connected to a respective one of the plurality of control loops (300) on the second transmission path (615) and each modem is arranged to receive the first protocol and extract the digital data from the first protocol, wherein each of the plurality of extraction components (620) includes a serial device connected to each extraction component modem and each serial device is arranged to receive the digital data from its connected modem and assemble the received digital data into a first protocol data frame for each control loop.

12. The bridging device of claim 11 wherein, the memory (640) is arranged to receive and store within a respective register of the memory a first protocol data frame from each extraction component serial device.

13. The bridging device of claim 12 wherein the processor (645) is arranged to fetch the first protocol data frame stored in each register of the memory and convert and assemble the stored first protocol data frames into the second protocol data packet.

14. The bridging device of claim 13 wherein, the first protocol is a HART network protocol and the second protocol is an Ethernet IP network protocol.

15. A method of extracting data from a plurality of field devices connected to a first network using a first protocol for transmission to a second network using a second protocol comprising;
receiving the first protocol from each of the plurality of field devices (202*a-d*);
routing the received first protocol to a controller (111) using a first transmission path (610) and to an extraction component (20) using a second transmission path (615);
extracting digital data from the first protocol using the extraction component (620) corresponding to each of the plurality of field devices; and
converting (625) the extracted digital data into a second protocol for transmission on a second network using the second protocol.
